# EUROPÄISCHE PATENTSCHRIFT

(11) **EP 2 307 746 B1**
(45) Veröffentlichungstag und Bekanntmachung des Hinweises auf die Patenterteilung: **09.10.2013**
(21) Anmeldenummer: 09780550.1
(22) Anmeldetag: 14.07.2009
(51) Int. Cl.: F16C 33/58, F16D 21/06

(54) **KUPPLUNGSEINHEIT**
CLUTCH UNIT
UNITÉ D'EMBRAYAGE

(30) Priorität: 25.07.2008 DE 102008034627
(43) Veröffentlichungstag der Anmeldung: 13.04.2011
(73) Patentinhaber: Schaeffler Technologies AG & Co. KG, 91074 Herzogenaurach (DE)
(72) Erfinder: BAUMANN, Jens, 97421 Schweinfurt (DE); SPITZMÜLLER, Lothar, 77948 Friesenheim (DE)
(74) Vertreter: Hoferer, Andreas
(86) Internationale Anmeldenummer: PCT/EP2009/058968
(87) Internationale Veröffentlichungsnummer: WO 2010/010004

(56) Entgegenhaltungen:
- EP-A1- 1 681 481
- EP-A2- 1 632 687
- WO-A1-99/02873
- FR-A1- 2 479 750
- JP-A- 2003 025 803

## Beschreibung

### Gebiet der Erfindung

Die vorliegende Erfindung betrifft eine Kupplungseinheit gemäß dem Oberbegriff des Anspruchs 1.

### Hintergrund der Erfindung

Wälzlager werden unter anderem zur Lagerung und Abstützung von Kupplungseinheiten bspw. in Trockenkupplungen oder als Getriebelager eingesetzt. Hierbei sind in der Regel separate Verbindungs- und Haltevorrichtungen, wie bspw. Lagerträger, notwendig, um die Wälzlager an anderen Bauteilen, wie bspw. drehbaren Kupplungsplatten, oder einem stehenden Gehäuse zu befestigen. Die Wälzlager umfassen in der Regel einen Innenring und einen Außenring sowie zwischen diesen Ringen angeordnete Wälzkörper, wobei die Wälzkörper auf Laufflächen des Innenrings und des Außenrings abrollen, so dass zwischen dem Außenring und dem Innenring eine Relativbewegung möglich ist.

Die Verwendung von separaten Kupplungsplatten und separaten Lagerträgern erfordert jedoch eine zusätzliche Montage dieser Bauteile an dem Wälzlager. Das Wälzlager und die Kupplungsplatte bzw. das Wälzlager und der Lagerträger müssen daher in einem ersten Schritt zunächst zusammengesetzt werden, bevor das Wälzlager in nachfolgenden Schritten verbaut werden kann. Des weiteren erfordert eine derartige Ausführung eine geeignete Verbindung der Bauteile mit dem Innen- bzw. Außenring, die jedoch aufgrund des Platzbedarfs dieser Verbindung und des meist sehr eingeschränkten Bauraums solcher Wälzlager dazu führt, dass das gesamte Wälzlager kleiner ausgeführt werden muss bzw. kleinere Wälzkörper verwendet werden müssen. Hierdurch wird deren Stützkraft und Langlebigkeit herabgesetzt. Des weiteren kann das Wälzlager aufgrund des geringen Bauraums nur einen kleinen Raum für Schmiermittel bereitstellen. Dies hat zur Folge, dass dieser Schmiermittelraum nur eine unzureichende Menge an Schmierstoff aufnehmen kann, wodurch eine erfor-derliche Schmiermittel- bzw. Fettgebrauchsdauer nicht erzielt wird.

Insbesondere wegen des beengten Bauraums wird daher bei bisherigen Lagerungen bevorzugt eine Befestigung des Lagerträgers an dem Außenring des Wälzlagers eingesetzt, um mit Hilfe des Lagerträgers einen Flansch zur Befestigung des Wälzlagers an einem stehenden Bauteil bereitzustellen. Dementsprechend wird an dem Innenring in der Regel die Kupplungsplatte befestigt.

Aus der Druckschrift DE 10 2005 014 916 A1 ist eine Radiallagerung für eine Antriebswelle von Fahrzeugen bekannt. Diese umfasst ein Radiallager, das auf einem Außenring von einem separaten Halteelement bzw. Lagerträger beaufschlagt wird. Das Halteelement weist einen Flansch zur Befestigung des Radiallagers auf, wobei der Außenring derart in dem Halteelement gehalten wird, dass das Radiallager selbst zentrierbar ist.

Aus der Druckschrift DE 200 16 713 U1 ist eine Lageranordnung bekannt, die einen drehbaren Innenring mit einem mit einer Druckmaschinenwalze verbundenen Flansch aufweist. Der zugehörige Außenring weist ebenfalls einen Flansch auf, der an einem stehenden Gehäuse angebracht ist.

Aus der Druckschrift EP 1 681 481 A1 ist eine gattungsgemäße Kupplungseinheit bekannt.

### Aufgabe der Erfindung

Der Erfindung liegt die Aufgabe zugrunde, die genannten Nachteile des Stands der Technik zu überwinden. Insbesondere soll eine einfache Montage ermöglicht sowie der zur Verfügung stehende Bauraum in hohem Maße ausgenutzt werden, so dass größere Wälzlager einsetzbar sind. Auch soll damit ein möglichst großer Raum zur Aufnahme von Schmiermittel bereitgestellt werden, wodurch eine einfache, zuverlässige und kostengünstige Ausführung des Lagers erzielt werden kann.

### Zusammenfassung der Erfindung

Die Aufgabe der Erfindung wird durch eine Kupplungseinheit nach Anspruch 1 gelöst.

Demnach besteht das Wälzlager aus mindestens einem Innenring und mindestens einem Außenring, wobei zwischen dem Außenring und dem Innenring eine Relativbewegung möglich ist und der mindestens eine Außenring mindestens einen Flansch zur Befestigung an einem drehbaren Bauteil umfasst. Die Begrifflichkeit eines "stehenden" und "drehbaren" Bauteils ist im folgenden jeweils mit Bezug auf das zugehörige Fahrzeug oder Getriebe zu verstehen und beschreibt eine entsprechende Relativbewegung zu diesem.

Entsprechend einer Ausführungsform ist der mindestens eine Flansch als Kupplungsplatte ausgebildet. Hierzu kann der Flansch Kontaktflächen aufweisen, die an einem mit dem Flansch in Verbindung stehenden Bauteil aufliegen, so dass eine Rotationsbewegung zwischen dem Flansch und dem Bauteil übertragbar ist. In diesem Fall sind die Rotationsachse des Flansches und eine Rotationsachse des Bauteils identisch.

Außerdem kann der mindestens eine Innenring mindestens einen Befestigungsflansch zur Befestigung des mindestens einen Innenrings an einem stehenden Bauteil umfassen. Eine entsprechende Ausgestaltung des Innenrings wird nachfolgend noch detailliert dargestellt.

Ferner ist der Flansch zur festen Verbindung einstückig mit dem mindestens einen Außenring ausgebildet. Der Außenring und der Flansch bilden somit ein fest zusammenhängendes Bauteil. Aufwendige und Bauraum beanspruchende lose Verbindung einzelner Bauteile mit überlappenden oder verbindenden Elementen zwischen dem Flansch und dem Außenring des Wälzlagers, wie sie bspw. bei der Verbindung des Außenrings mit einem separaten Kupplungsflansch auftreten, können vermieden werden. Der Außenring und der Flansch können statt dessen gemeinsam, bspw. durch Ziehen oder Gießen, einstückig ausgebildet werden. Ebenso ist eine geeignete Verbindungsmethode, wie bspw. Schweißen, anwendbar, um den Flansch an dem Außenring zu befestigen.

Ferner kann der mindestens eine Flansch kaltumgeformt oder geschmiedet mit dem Außenring ausgebildet sein.

Entsprechend einer weiteren Ausgestaltungsform ist der mindestens eine Flansch umlaufend an dem Außenring ausgebildet. Der Flansch und der Außenring bilden somit an jeder beliebigen Position in Umfangrichtung des Außenrings einen identischen Querschnitt, so dass der Außenring mit dem Flansch einen einheitlichen geometrischen Rotationskörper bildet. Bspw. erstreckt sich der Flansch in radialer Richtung von dem Außenring weg, so dass ein im wesentlichen L-förmiger oder ein T-förmiger Querschnitt entsteht. Der Außenring und der Flansch bilden hierbei jeweils einen Schenkel des jeweiligen Querschnitts. Selbstverständlich sind auch andere geeignete Querschnittsformen und Ausrichtungen der Schenkel möglich.

Gemäß einer weiteren Ausführungsform ist der mindestens eine Flansch an mindestens einem Teilsegment des Außenrings ausgebildet. Demnach kann der voranstehend beschriebene umlaufende Flansch des Außenrings abschnittsweise unterbrochen oder lediglich an Teilbereichen des Außenrings angeordnet bzw. ausgebildet sein, so dass der Flansch eine Lasche bildet, die an dem Außenring befestigt bzw. mit diesem verbunden ist. Es kann hierbei eine beliebige Anzahl von einzelnen Flanschen bzw. Laschen an dem Außenring umlaufend in Umfangsrichtung angeordnet sein, die sich bspw. in radialer Richtung von dem Außenring nach außen erstrecken.

Gemäß einer anderen Ausführungsform umfasst der mindestens eine Flansch Befestigungsvorrichtungen zur Befestigung des Flanschs an dem drehbaren, mit dem Flansch verbundenen drehbaren Bauteil.

Beispielsweise umfasst der Flansch Ausnehmungen oder Bohrungen zur Aufnahme von Schrauben oder anderen Verbindungsmitteln, um den Flansch bzw. das gesamte Wälzlager an dem drehbaren Bauteil zu befestigen, das an den Flansch anschließt.

Das Wälzlager selbst kann bspw. als Rillenkugellager, Vierpunktlager oder Schrägkugellager ausgebildet sein.

Ferner kann der Flansch Zentriermittel umfassen. Diese Zentriermittel können bspw. Nasen oder andere geeignete Vorrichtungen aufweisen, die eine exakte Zentrierung des Wälzlagers bei der Befestigung des Flansches an dem drehbaren Bauteil ermöglichen. Diese wirken mit entsprechenden Ausformungen des Bauteils zusammen und stellen somit einen exakten und passgenauen Sitz des Wälzlagers und dementsprechend eine korrekte Ausrichtung seiner Rotationsachse sicher.

Erfindungsgemäß ist das Wälzlager zur Abstützung der Kupplungseinheit ausgebildet.

Gemäß einer voranstehend beschriebenen Ausführungsform umfasst das Wälzlager neben dem Außenring mit Flansch des weiteren mindestens einen Innenring mit mindestens einen Befestigungsflansch zur Befestigung des mindestens einen Innenrings an einem stehenden Bauteil.

Die folgenden Ausführungsformen des Innenrings können hierbei mit den voranstehend beschriebenen Ausführungsformen des Außenrings in beliebiger Weise kombiniert werden.

Gemäß einer Ausführungsform ist der mindestens eine Befestigungsflansch des Innenrings fest mit dem mindestens einen Innenring verbunden. Außerdem kann der Befestigungsflansch zur festen Verbindung einstückig mit dem mindestens einen Innenring ausgebildet sein.

Der Innenring und der Befestigungsflansch bilden somit in beiden Ausführungsformen ein fest zusammenhängendes Bauteil. Aufwendige und Bauraum beanspruchende lose Verbindung einzelner Bauteile mit überlappenden oder verbindenden Elementen zwischen dem Befestigungsflansch und dem Innenring des Wälzlagers, wie sie bei der Verwendung von Lagerträgern auftreten, können vermieden werden. Der Innenring und der Befestigungsflansch können statt dessen gemeinsam, bspw. durch Ziehen, Kaltumformen, Schmieden oder Gießen, einstückig ausgebildet werden. Ebenso ist eine geeignete Verbindungsmethode, wie bspw. Schweißen, anwendbar, um den Befestigungsflansch an dem Innenring zu befestigen.

Außerdem kann der mindestens eine Befestigungsflansch umlaufend an dem Innenring ausgebildet sein.

Der Befestigungsflansch und der Innenring bilden somit an jeder beliebigen Position in Umfangrichtung des Innenrings einen identischen Querschnitt, so dass der Innenring mit dem Befestigungsflansch einen einheitlichen geometrischen Rotationskörper bildet. Bspw. erstreckt sich der Befestigungsflansch in radialer Richtung von dem Innenring weg, so dass ein im wesentlichen L-förmiger Querschnitt entsteht. Der Innenring und der Befestigungsflansch bilden hierbei jeweils einen Schenkel des L-förmigen Querschnitts. Selbstverständlich sind auch andere Querschnittsformen und Ausrichtungen der Schenkel möglich.

Gemäß einer weiteren Ausführungsform ist der mindestens eine Befestigungsflansch an mindestens einem Teilsegment des Innenrings ausgebildet.

Demnach kann der voranstehend beschriebene umlaufende Befestigungsflansch abschnittsweise unterbrochen oder lediglich an Teilbereichen des Innenrings angeordnet bzw. ausgebildet sein, so dass der Befestigungsflansch eine Lasche bildet, die an dem Innenring befestigt bzw. mit diesem verbunden ist. Es kann hierbei eine beliebige Anzahl von einzelnen Befestigungsflanschen bzw. Laschen an dem Innenring umlaufend in Umfangsrichtung angeordnet sein, die sich bspw. in radialer Richtung von dem Innenring nach außen erstrecken.

Außerdem kann der mindestens eine Befestigungsflansch mindestens eine Zentriernase zur Zentrierung des Wälzlagers umfassen.

Demnach kann der Befestigungsflansch Nasen oder andere geeignete Vorrichtungen aufweisen, die eine exakte Zentrierung des Wälzlagers bei der Befestigung an anderen Bauteilen, wie bspw. dem stehenden Gehäuse, ermöglichen. Diese wirken mit entsprechenden Ausformungen des Bauteils zusammen und stellen somit einen exakten und passgenauen Sitz des Wälzlagers und dementsprechend eine korrekte Ausrichtung seiner Rotationsachse sicher.

Gemäß einer weiteren Ausführungsform umfasst der mindestens eine Befestigungsflansch Ausnehmungen zur Montage von Dichtungen des Wälzlagers.

Die Montage kann bspw. derart erfolgen, dass zunächst mindestens eine dem Befestigungsflansch zugewandte Dichtung auf dem Befestigungsflansch bzw. dem Innenring montiert wird und anschließend die verbleibenden Komponenten wie Wälzkörper, weitere Dichtungen sowie der Außenring hinzugefügt werden. Um für eine Montage des Wälzlagers und ein Einsetzen der Dichtungen trotz des Befestigungsflanschs einen geeigneten Zugang zu schaffen, können die Ausnehmungen in dem Befestigungsflansch an geeigneten Stellen angeordnet sein. Die Ausnehmungen können einen radialen oder axialen Versatz der Dichtungen bei der Vormontage auf den Befestigungsflansch erlauben. Des weiteren können Montageausnehmungen in dem Befestigungsflansch zur Montage der Dichtung vorgesehen sein, um ein Einsetzen insbesondere der dem Befestigungsflansch zugewandten Dichtung zu unterstützen und einen Zugang zu dieser Dichtung bereitzustellen. Darüber hinaus erlauben die Montageausnehmungen einen einfacheren Zusammenbau des gesamten Wälzlagers. Selbstverständlich kann der Außenring ebenfalls entsprechend dem Innenring mit entsprechenden Ausnehmungen ausgeführt werden, um eine Montage des Wälzlagers zu erleichtern.

Ferner kann der Befestigungsflansch Befestigungsvorrichtungen zur Befestigung des Innenrings an dem stehenden Bauteil umfassen.

Beispielsweise umfasst der Befestigungsflansch Ausnehmungen oder Bohrungen zur Aufnahme von Schrauben oder anderen Verbindungsmitteln, um den Befestigungsflansch bzw. das gesamte Wälzlager an dem stehenden Gehäuse zu befestigen.

Entsprechend einer anderen Ausführungsform sind die Dichtungen des Wälzlagers als einfache oder zweifache Dichtungen ausgebildet. Selbstverständlich sind ebenso andere geeignete Vorrichtungen zur Abdichtung des Wälzlagers einsetzbar.

### Kurze Beschreibung der Zeichnungen

Die Erfindung ist nachfolgend anhand von Ausführungsbeispielen näher erläutert. In den dazu gehörigen Zeichnungen zeigt dabei:
- Figur 1: einen Querschnitt des beschriebenen Wälzlagers mit Flansch an einem Außenring,
- Figur 2: einen Querschnitt durch ein Getriebe mit einem Wälzlager in eingebautem Zustand.
- Figur 3: einen Querschnitt des beschriebenen Wälzlagers mit Befestigungsflansch an einem Innenring,
- Figur 4: ein Wälzlager mit Flansch an dem Innenring gemäß der Beschreibung in perspektivischer Ansicht.

### Ausführliche Beschreibung der Zeichnungen

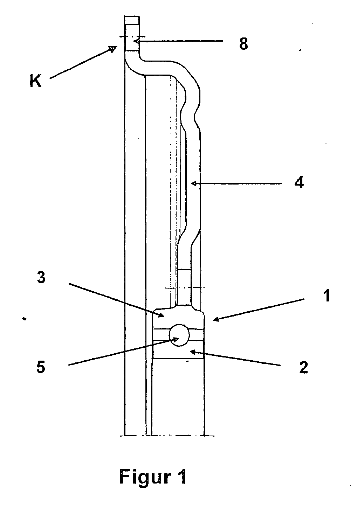

Figur 1 zeigt einen Querschnitt eines Wälzlagers 1 mit einem Flansch 4, das im wesentlichen einen Innenring 2 und einen Außenring 3 und zwischen diesen angeordnete Wälzkörper 5 umfasst. Der Flansch 4 ist einstückig mit dem Außenring 3 ausgebildet und erstreckt sich im wesentlichen in radialer Richtung des Wälzlagers 1 von dem Außenring 3 weg. Der Flansch 4 stellt in der dargestellten Ausführungsform eine Kupplungsplatte dar und ist als tellerförmige Scheibe bzw. Platte ausgeführt, die eine Kontaktfläche K aufweist. Des weiteren weist der Flansch 4 Befestigungsvorrichtungen 8 auf, die Bohrungen zur Aufnahme von Verbindungsschrauben (nicht dargestellt) umfassen.

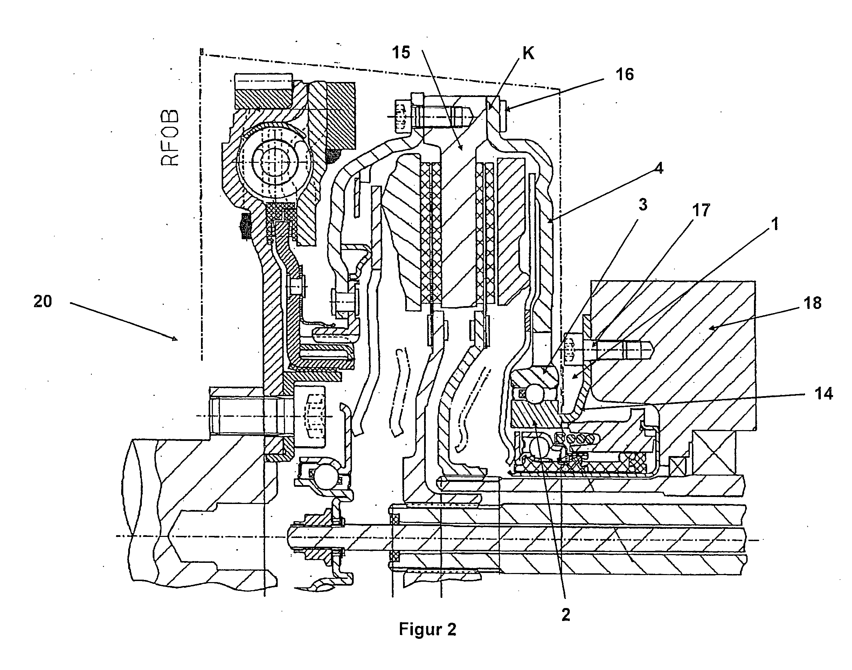

Figur 2 zeigt einen Querschnitt durch ein Getriebe 20, das das mit dem beschriebenen Wälzlager 1 mit dem Flansch 4 an dem Außenring 3 und einem Befestigungsflansch 14 an einem Innenring 2 umfasst, in eingebautem Zustand. Hierbei ist der Flansch 4, der eine Kupplungsplatte darstellt, an der Kontaktfläche K mit einem weiteren drehbaren Bauteil 15 mittels Schrauben 16 verbunden. Des weiteren ist der Befestigungsflansch 14 des Innenrings 2 mittels Schrauben 17 an einer einem Gehäuse zuzuordnenden Wand 18 befestigt. Beide Flansche 4, 14 stehen somit in unmittelbarem bzw. direktem Kontakt mit dem jeweiligen angrenzenden Bauteil 15, 18, so dass keine separaten Verbindungselemente bzw. Adapterstücke verwendet werden müssen.

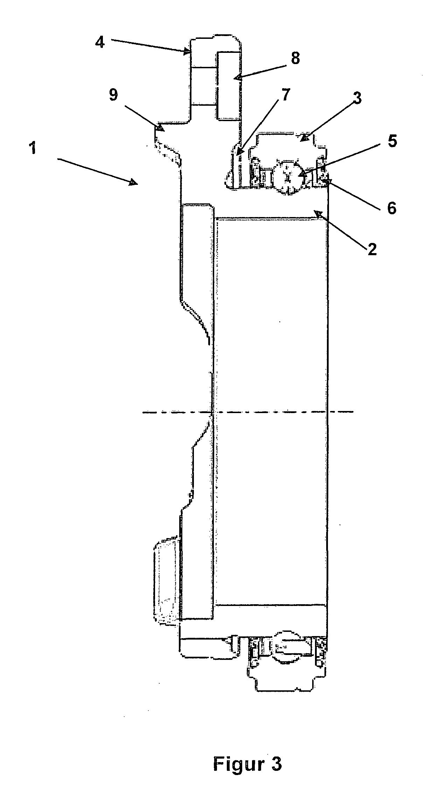

Figur 3 zeigt einen Querschnitt eines Wälzlagers 1 mit einem Befestigungsflansch 14, das im wesentlichen einen Innenring 2 und einen Außenring 3 und zwischen diesen angeordnete Wälzkörper 5 umfasst. Die Wälzkörper 5 sind durch Dichtungen 6 gegenüber der Umgebung abgedichtet, die als einfache Dichtungen dargestellt sind. Selbstverständlich sind ebenso andere geeignete bzw. dem Fachmann bekannte Dichtungen möglich. Der Befestigungsflansch 14 ist in der dargestellten Ausführungsform einstückig mit dem Innenring 2 ausgebildet und erstreckt sich rechtwinklig von diesem in radialer Richtung. Der Innenring 2 und der Befestigungsflansch 14 bilden hierbei eine L-förmige Querschnittsform. Auf einer äußeren Fläche bzw. Stirnseite des Befestigungsflansches 14 ist eine Zentriernase 9 angeordnet, die bei einer Montage des Befestigungsflansches 14 an einem stehenden Bauteil (nicht dargestellt) eine exakte Zentrierung des gesamten Wälzlagers 1 sicherstellt. Hierbei beaufschlagt die Zentriernase 9 eine entsprechend ausgestaltete Oberfläche des Bauteils. Des weiteren weist der Befestigungsflansch 14 Befestigungsvorrichtungen 8 auf, die in der dargestellten Ausführungsform als Bohrung mit abgestuftem Durchmesser zur Aufnahme von Befestigungsmitteln, wie bspw. einer Schraube, um den Befestigungsflansch 14 an dem stehenden Bauteil zu befestigen. Der Befestigungsflansch 14 ist als Lasche ausgebildet, die an einer definierten Position an dem Innenring 2 angeordnet ist
   Der Befestigungsflansch 14 weist darüber hinaus Ausnehmungen 7 auf, die eine Montage des Wälzlagers 1 insbesondere der Dichtungen 6 erleichtern.

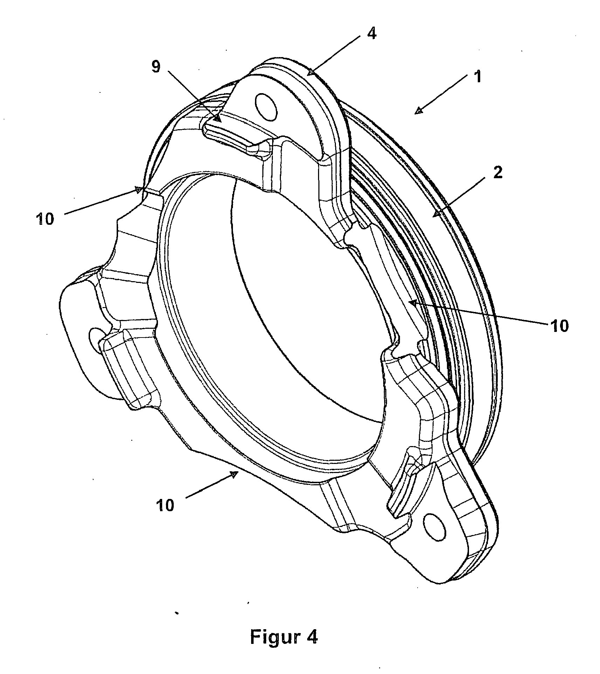

Figur 4 zeigt das in der Figur 3 beschriebene Wälzlager 1 mit mehreren Befestigungsflanschen 14 in einer weiteren perspektivischen Ansicht. Das Wälzlager 1 weist in der dargestellten Ausführungsform drei Befestigungsflansche 14 auf, die in Umfangrichtung in regelmäßigen Abständen voneinander beabstandet an einer Seitenfläche des Innenrings 2 angeordnet sind. Die Befestigungsflansche 14 erstrecken sich im wesentlichen in radialer Richtung von dem Wälzlager 1 weg. Jeder Befestigungsflansch 14 weist eine lokal variierende Dicke auf, die entsprechend den zu erwartenden Belastungen ausgelegt sein kann. Selbstverständlich ist ebenso eine konstante Dicke der Befestigungsflansche 14 möglich. Des weiteren umfasst jeder Befestigungsflansch 14 eine Zentriernase 9 zur Zentrierung des Befestigungsflansches 14 bzw. des Wälzlagers 1 bei einer Montage an dem stehenden Bauteil 18.

Ferner ist eine Anzahl von an dem Befestigungsflansch 14 ausgebildeten Montageausnehmungen 10 zur Montage der Dichtung dargestellt. Diese erlauben einen Zugang zu den Dichtungen 6 während der Montage, insbesondere zu der dem Befestigungsflansch 4 zugewandten Dichtung 6, und eine vereinfachte Montage des gesamten Wälzlagers.

### Bezugszeichenliste

- 1: Wälzlager
- 2: Innenring
- 3: Außenring
- 4: Flansch
- 5: Wälzkörper
- 6: Dichtungen
- 7: Ausnehmung
- 8: Befestigungsvorrichtung
- 9: Zentriernase
- 10: Montageausnehmung
- 14: Befestigungsflansch
- 15: drehbares Bauteil
- 16: Schraube
- 17: Schraube
- 18: stehendes Bauteil
- 19: Getriebe
- 20: Kontaktfläche

## Patentansprüche

1. Kupplungseinheit mit einem Wälzlager (1) zur Abstützung der Kupplungseinheit, mit mindestens einem Innenring (2) und mindestens einem Außenring (3), wobei zwischen dem Außenring (3) und dem Innenring (2) eine Relativbewegung möglich ist, **dadurch gekennzeichnet, dass** der mindestens eine Außenring (3) mindestens einen an einem im Betrieb der Kupplungseinheit drehenden Bauteil (15) der Kupplungseinheit befestigten Flansch (4) umfasst, dass der Flansch (4) mit dem Außenring (3) einstückig ausgebildet ist und dass der Flansch (4) sich in radialer Richtung von dem Innenring (2) weg erstreckt und in radialer Richtung wenigstens eine Anpressplatte der Kupplungseinheit überragt.

2. Kupplungseinheit nach Anspruch 1, **dadurch gekennzeichnet, dass** der mindestens eine Flansch (4) als Kupplungsplatte ausgebildet ist.

3. Kupplungseinheit nach Anspruch 1 oder 2, **dadurch gekennzeichnet, dass** der mindestens eine Innenring (2) mindestens einen Befestigungsflansch (14) zur Befestigung des mindestens einen Innenrings (2) an einem stehenden Bauteil (18) umfasst.

4. Kupplungseinheit nach einem der Ansprüche 1 bis 3, **dadurch gekennzeichnet, dass** der mindestens eine Flansch (4) umlaufend an dem Außenring (2) ausgebildet ist.

5. Kupplungseinheit nach einem der Ansprüche 1 bis 4, **dadurch gekennzeichnet, dass** der mindestens eine Flansch (4) kaltumgeformt oder geschmiedet mit dem Außenring (2) ausgebildet ist.

6. Kupplungseinheit nach einem der Ansprüche 1 bis 5, **dadurch gekennzeichnet, dass** der mindestens eine Flansch (4) Befestigungsvorrichtungen (8) zur Befestigung des Flanschs (4) an dem drehbaren Bauteil (15) umfasst.

7. Kupplgngseinheit nach einem der Ansprüche 1 bis 6, **dadurch gekennzeichnet, dass** das Wälzlager (1) als Rillenkugellager, Vierpunktlager oder Schrägkugellager ausgebildet ist.

8. Kupplungseinheit nach einem der Ansprüche 1 bis 7, **dadurch gekennzeichnet, dass** der Flansch (4) Zentriermittel umfasst.

## Claims

1. Clutch unit having a rolling bearing (1) for the support of the clutch unit, having at least one inner ring (2) and at least one outer ring (3), a relative movement being possible between the outer ring (3) and the inner ring (2), **characterized in that** the at least one outer ring (3) comprises at least one flange (4) which is fastened to a component (15) of the clutch unit, which component (15) rotates during operation of the clutch unit, **in that** the flange (4) is configured integrally with the outer ring (3), and **in that** the flange (4) extends in the radial direction away from the inner ring (2) and protrudes in the radial direction beyond at least one pressure plate of the clutch unit.

2. Clutch unit according to Claim 1, **characterized in that** at least the one flange (4) is embodied as a clutch plate.

3. Clutch unit according to Claim 1 or 2, **characterized in that** at least the one inner ring (2) comprises at least one fastening flange (14) for fastening at least the one inner ring (2) to a stationary component (18).

4. Clutch unit according to one of Claims 1 to 3, **characterized in that** at least the one flange (4) is formed circumferentially on the outer ring (2).

5. Clutch unit according to one of Claims 1 to 4, **characterized in that** at least the one flange (4) is cold-formed or forged with the outer ring (2).

6. Clutch unit according to one of Claims 1 to 5, **characterized in that** at least the one flange (4) comprises fastening devices (8) for fastening the flange (4) to the rotatable component (15).

7. Clutch unit according to one of Claims 1 to 6, **characterized in that** the rolling bearing (1) is embodied as a deep-groove ball bearing, a fourpoint contact ball bearing or an angular-contact ball bearing.

8. Clutch unit according to one of Claims 1 to 7, **characterized in that** the flange (4) comprises means of centering.

## Revendications

1. Unité d'embrayage comprenant un palier à roulement (1) pour le support de l'unité d'embrayage, comprenant au moins une bague interne (2) et au moins une bague externe (3), un mouvement relatif étant possible entre la bague externe (3) et la bague interne (2), **caractérisée en ce que** l'au moins une bague externe (3) comprend au moins une bride (4) fixée sur un composant (15) de l'unité d'embrayage tournant pendant le fonctionnement de l'unité d'embrayage, **en ce que** la bride (4) est réalisée d'une seule pièce avec la bague externe (3) et **en ce que** la bride (4) s'étend dans la direction radiale depuis la bague interne (2) et dépasse dans la direction radiale au moins un plateau de pressage de l'unité d'embrayage.

2. Unité d'embrayage selon la revendication 1, **caractérisée en ce que** l'au moins une bride (4) est réalisée sous forme de plateau d'embrayage.

3. Unité d'embrayage selon la revendication 1 ou 2, **caractérisée en ce que** l'au moins une bague interne (2) comprend au moins une bride de fixation (14) pour la fixation de l'au moins une bague interne (2) sur un composant fixe (18).

4. Unité d'embrayage selon l'une quelconque des revendications 1 à 3, **caractérisée en ce que** l'au moins une bride (4) est réalisée sous forme périphérique sur la bague externe (2).

5. Unité d'embrayage selon l'une quelconque des revendications 1 à 4, **caractérisée en ce que** l'au moins une bride (4) est façonnée à froid ou est forgée avec la bague externe (2).

6. Unité d'embrayage selon l'une quelconque des revendications 1 à 5, **caractérisée en ce que** l'au moins une bride (4) comprend des dispositifs de fixation (8) pour la fixation de la bride (4) sur le composant rotatif (15).

7. Unité d'embrayage selon l'une quelconque des revendications 1 à 6, **caractérisée en ce que** le palier à roulement (1) est réalisé sous forme de roulement rainuré à billes, de roulement à quatre points, ou de roulement à billes à contacts obliques.

8. Unité d'embrayage selon l'une quelconque des revendications 1 à 7, **caractérisée en ce que** la bride (4) comprend des moyens de centrage.
